# EUROPEAN PATENT APPLICATION

(11) **EP 1 515 125 A1**
(43) Date of publication of application: **16.03.2005**
(21) Application number: 03388060.0
(22) Date of filing: 11.09.2003
(51) Int. Cl.: G01G 19/393, G01G 13/04

(54) **Device and method for weighing and batching articles**

(71) Applicant: CABINPLANT INTERNATIONAL A/S, DK-5683 Haarby (DK)
(72) Inventor: Hansen, Henning Ingemann, 5220 Odense SO (DK)
(74) Representative: Nielsen, Henrik Sten

(57) **Abstract**

A weighing and batching system for weighing and collecting a batch of articles within a target weight interval comprises a frame defining a top and a bottom opposite the top, and a feeder system having an inlet for receiving the articles and a plurality of outlets for discharging the articles. The system further includes a first plurality of weighing pans mounted in the frame. Each weighing pan defines a first open end and is oriented upwardly and positioned below the outlets of the feeder system for receiving a portion of the articles discharged from a respective outlet. Each weighing pan includes a first actuator for operating the respective weighing pan between a weighing state and a transfer state. Each weighing pan includes a first weighing transducer for generating a first signal representing the weight of the portion received and defines a first receiving volume. The system also includes a second plurality of weighing pans mounted in the frame. Each weighing pan defines a second open end and is oriented upwardly and positioned below the outlets of the feeder system for receiving a portion of the articles discharged from a respective outlet. Each weighing pan includes a second actuator for reversibly operating the respective weighing pan between a weighing state and a transfer state. Each weighing pan includes a second weighing transducer for generating a second signal representing the weight of the portion received and defines a second receiving volume, the second receiving volume being 2 to 50 times the first receiving volume, such as 5 to 45, such as 10 to 40, such as 15 to 30, such as 15 to 25, such as 17 to 21, such as 2 to 5, such as 5 to 10, such as 10 to 15, such as 15 to 20, such as 20 to 25, such as 25 to 30, such as 30 to 35, such as 35 to 40.

## Description

The present invention relates to a technique for weighing and collecting batches of articles, each batch having a total weight within a given target weight interval.

Within industries such as foodstuff industry, combined weighing and batching machines have been described in publications such as US 4,382,527, US 4,811,256, US 4,901,807, US 5,753,866, US 5,813,195, US 6,262,377, US 6,360,870, US 6,441,322, EP 0 592 349 and EP 0 746 113, all of which are hereby included in the present specification by reference. The publication US 4,901,807 describes a combination weigher comprising a number of receptacles for accumulating a batch of products, each receptacle emptying the product into a multiple compartment weighing device wherein the volume of the weighing compartments are substantially equal.

A combination of a weighing and batching machine such as described in US 4,901,807 suffers, however, from certain limitations due to the size of the receptacles and weighing compartments. Collecting one batch with a high total weight requires combination of a high number of weighing compartments to be emptied at one time. This operation is contemplated to be limiting to the throughput of the machine. The present invention seeks to provide an improved combination weighing machine having a high throughput.

Due to the recognition of certain drawbacks in the technique used in conventional weighing and batching machines, it has been realised that there is a need for an improved high throughput weighing and batching machine in which the weighing and batching may be performed by employing multiple receptacles or weighing pans having different volumes and thereby possibly accumulating in one or more of the receptacles a large portion having a weight close to the desired target weight and thereby reducing the number of specific quantities to be combined into the target batch.

A particular feature of the present invention relates to the fact that the weighing and batching system according to the present invention further allows the addition of containment receptacles for containing the portion collected in the small weighing pans thereby adding a pipeline-like or queue function to the weighing and batching machine.

The above need, the above object, the above feature and the above advantage together with numerous other objects, advantages and features which will be evident from the below detailed description of the first and presently preferred embodiment of the weighing and classifying system according to the present invention are obtained according a first aspect of the present invention by a weighing and batching system for weighing and collecting a batch of articles within a target weight interval, the system comprising:
a frame defining a top and a bottom opposite the top,
a feeder system having an inlet for receiving the articles and a plurality of outlets for discharging the articles,
a first plurality of weighing pans mounted in the frame, each of the weighing pans defining a first open end oriented upwardly and being positioned below the outlets of the feeder system for receiving in each of the weighing pans a portion of the articles discharged from a respective outlet, each of the first plurality of weighing pans spread along a first circumference, each of the weighing pans being operable between a weighing state and a transfer state, each of the weighing pans including a first actuator, each of the first actuators reversibly operating a respective weighing pan between the weighing state and the transfer state, each of the weighing pans accumulating the portion of the articles received through the first end of the weighing pan from a respective outlet of the feeder system when in the weighing state, and the weighing pan transferring the portion of the articles when in the transfer state, each of the weighing pans including a first weighing transducer for generating a first signal representing the weight of the portion received within the weighing pan, each of the weighing pans defining a first receiving volume,
a second plurality of weighing pans mounted in the frame, each of the weighing pans defining a second open end oriented upwardly and being positioned below the outlets of the feeder system for receiving in each of the weighing pans a portion of the articles discharged from a respective outlet, each of the second plurality of weighing pans spread along the first circumference, each of the weighing pans being operable between a weighing state and a transfer state, each of the weighing pans including a second actuator, each of the second actuators reversibly operating a respective weighing pan between the weighing state and the transfer state, each of the weighing pans accumulating the portion of the articles received through the second end of the weighing pan from a respective outlet of the feeder system when in the weighing state, and the weighing pan transferring the portion of the articles when in the transfer state, each of the weighing pans including a second weighing transducer for generating a second signal representing the weight of the portion received within the weighing pan, each of the weighing pans defining a second receiving volume, the second receiving volume being 2 to 50 times the first receiving volume, such as 5 to 45 times, such as 10 to 40 times, such as 15 to 30 times, such as 15 to 25 times, such as 17 to 21 times, such as 2 to 5 times, such as 5 to 10 times, such as 10 to 15 times, such as 15 to 20 times, such as 20 to 25 times, such as 25 to 30 times, such as 30 to 35 times, such as 35 to 40 times, and
a timing hopper mounted in the frame defining a third open end oriented upwardly, the third open end defining a second circumference larger than the first circumference, the timing hopper further defining a fourth open end opposite the third open end, the fourth open end defining a third circumference smaller than the second circumference defined by the third open end, the batch of articles discharged from the fourth open end.

The weighing and batching system according to the present invention may further be fitted with a microprocessor based calculation unit connected to a data collecting unit. The data collecting unit collecting information regarding the weight of the batches in each of the weighing pans or receptacles and storing this information for the calculation unit to access this information in order to calculate a combination of weighing pans and/or receptacles to be collected into the target batch.

The calculation unit and the data collecting unit may be constituted by at least one microprocessor unit with a built-in data collection unit, such as an A/D converter, alternatively the electrical signal from the weighing units may be digital, such as from a digital weighing transducer, the microprocessor may then receive the signal directly alternatively via a multiplex device for receiving signals from a larger number of weighing units and/or weighing transducers.

The weighing and batching system according to the present invention may include a reject device mounted below the timing hopper, the reject device operating between a reject state and a pass state, when the reject device is in the reject state the articles transferred from the first and/or the second plurality of weighing pans being rejected, when the reject device is in the pass state the articles transferred from the first and/or the second plurality of weighing pans being passed through the reject device. This may be helpful in a situation where any combination of weighing pans and/or receptacles does not result in a target weight within the specified target weight interval. The number of weighing pans and/or receptacles to be emptied are at least one, and may be as high as the total number of weighing pans and/or receptacles. The reject device may be constituted by the timing hopper.

The target batch weight and the tolerances, or the weight interval wherein the target batch weight must lie, may be provided to the system by an input device such as a touch screen device or a keyboard device mounted on the frame or connected to the calculation unit by wiring or wireless connections or any other input means, such as pointing devices or voice command recognition.

Alternatively, the calculation unit and/or the data collecting unit may be connected to a communication device such as a NIC card, preferably Ethernet-based or a WLAN device, a WPAN device (IEEE 802.11.F/IEEE 802.15.2), a device for establishing a data connection using a wireless protocol such as GSM data, GPRS, EDGE, IrDA, Blue Tooth or any other communication method or protocol, a modem connected to a phone line, either analogue or digital, or any other communication device for establishing a path of communication over a local network, a wide area network, a global area network, the Internet or any other communication network. The communication path is established to an external, remotely placed computer or server, e.g. a computer or server placed in a control room, the computer or server including a program for monitoring the operation of one or more weighing and batching systems in a production hall.

The weighing and batching system according to the present invention may further include a surveillance system such as one or more cameras for remotely monitoring the operation of the weighing and batching machine.

In an alternative embodiment of the present invention, a vision system comprising one or more cameras and image-analysis software may constitute the weighing transducer, e.g. by detecting the amount of articles by analysing an image of the top of each of the weighing receptacles, and from knowledge of the density of the articles thereby determine the weight of the portion. The camera or cameras may also be used to count the number of articles.

According to a first advantage of the embodiment of the system according to the present invention is that in the weighing and batching machine the feeder system may be constituted by at least one vibrating and reciprocating device, alternatively a conveyor belt system, feed screw or any other conveying device or any combination thereof. The feeder system, and all other components of the system, may be selected to accommodate special requirements regarding the properties of the products or articles to be weighed and batched, such as fragility or stickiness of the products.

According to a first feature of the embodiment of the system according to the present invention the feeder system further comprising a plurality of vibrating feeders mounted in the frame below the vibrating and reciprocating device and above the first and the second plurality of weighing pans, each of the vibrating feeders receiving the articles, the vibrating feeders releasing the articles into the first and the second plurality of weighing pans in a substantially even distribution, alternatively the distribution is substantially Gaussian.

According to a second advantage of the embodiment of the system according to the present invention the system may further comprise a conveyor system mounted below the timing hopper, the conveyor system conveying receptacles for receiving a batch of articles having a specific total weight or a total weight within a given weight interval.

According the to teachings of the present invention the system may further comprise a microprocessor monitoring and calculation device for monitoring the weight of each of the portions in each of the weighing pans of the first and the second plurality, the calculation unit calculating a combination of the batches resulting in a total batch weight within the target weight interval. The combination is preferably based on selecting at least one of the weighing pans of the second plurality and at least one of the weighing pans of the first plurality.

According to a second feature of the embodiment of the system according to the present invention the system may further comprise a plurality of receptacles mounted in the frame, each of the receptacles mounted below the outlet, each of the receptacles defining a fifth open end oriented upwardly and being positioned below the outlets of the feeder system for receiving in each of the receptacles a portion of the articles discharged from a respective outlet, each of the receptacles positioned above a specific weighing pan of the first plurality, the plurality of receptacles corresponding to the first plurality of weighing pans.

According to a third feature of the embodiment of the system according to the present invention is that the system may further comprise a plurality of receptacles mounted in the frame, each of the receptacles defining a sixth open end oriented upwardly and being positioned below a specific weighing pan of the first plurality for receiving in each of the receptacles a portion of the articles, the plurality of receptacles corresponding to the first plurality of weighing pans.

Preferably the weighing and batching system according to the present invention may have the feeder system, the first and said second plurality of weighing pans and/or the timing hopper and/or the assembling pans being crafted in stainless steel, such as AISI 304 or AISI 316 or any combination thereof. The first and/or the second plurality of weighing pans and/or the timing hopper and/or the assembling pans may be profiled stainless steel.

According to the present invention the first plurality is at least two, preferably twelve and the second plurality is at least two, preferably six.

According to a fourth feature of the embodiment of the system according to the present invention the first plurality of weighing pans is 1 to 10 times said second plurality, such as 1 to 7 times, such as 1,5 to 5 times, such as 1,5 to 3,5 times, such as equal to said second plurality, such as 1 to 2 times, such as 2 to 3 times, such as 3 to 4 times, such as 4 to 5 times, such as 5 to 6 times, such as 6 to 7 times, such as 7 to 8 times, such as 8 to 9 times, such as 9 to 10 times.

According to a third advantage of the embodiment of the system according to the present invention the first circumference is substantially circular, elliptical, rectangular, square or any combination thereof.

According to a fifth feature of the embodiment of the system according to the present invention the feeder system, the first and the second plurality of weighing pans and/or the timing hopper may be coated with ceramics, polytetrafluoroethene, a nylon mat, a rubber mat or any combination thereof.

According to a second aspect of the present invention a method for weighing and collecting a batch of articles within a target weight interval, the method comprising:
providing a frame defining a top and a bottom opposite the top,
providing a feeder system having an inlet for receiving the articles and a plurality of outlets for discharging the articles,
providing a first plurality of weighing pans mounted in the frame, each of the weighing pans defining a first open end oriented upwardly and being positioned below the outlets of the feeder system for receiving in each of the weighing pans a portion of the articles discharged from a respective outlet, each of the first plurality of weighing pans spread along a first circumference, each of the weighing pans being operable between a weighing state and a transfer state, each of the weighing pans including a first actuator, each of the first actuators reversibly operating a respective weighing pan between the weighing state and the transfer state, each of the weighing pans accumulating the portion of the articles received through the first end of the weighing pan from a respective outlet of the feeder system when in the weighing state, and the weighing pan transferring the portion of the articles when in the transfer state, each of the weighing pans including a first weighing transducer for generating a first signal representing the weight of the portion received within the weighing pan, each of the weighing pans defining a first receiving volume,
providing a second plurality of weighing pans mounted in the frame, each of the weighing pans defining a second open end oriented upwardly and being positioned below the outlets of the feeder system for receiving in each of the weighing pans a portion of the articles discharged from a respective outlet, each of the second plurality of weighing pans spread along the first circumference, each of the weighing pans being operable between a weighing state and a transfer state, each of the weighing pans including a second actuator, each of the second actuators reversibly operating a respective weighing pan between the weighing state and the transfer state, each of the weighing pans accumulating the portion of the articles received through the second end of the weighing pan from a respective outlet of the feeder system when in the weighing state, and the weighing pan transferring the portion of the articles when in the transfer state, each of the weighing pans including a second weighing transducer for generating a second signal representing the weight of the portion received within the weighing pan, each of the weighing pans defining a second receiving volume, the second receiving volume being 2 to 50 times the first receiving volume, such as 5 to 45 times, such as 10 to 40 times, such as 15 to 30 times, such as 15 to 25 times, such as 17 to 21 times, such as 2 to 5 times, such as 5 to 10 times, such as 10 to 15 times, such as 15 to 20 times, such as 20 to 25 times, such as 25 to 30 times, such as 30 to 35 times, such as 35 to 40 times,
providing a timing hopper mounted in the frame defining a third open end oriented upwardly, the third open end defining a second circumference larger than the first circumference, the timing hopper further defining a fourth open end opposite the third open end, the fourth open end defining a third circumference smaller than the second circumference defined by the third open end, the batch of articles discharged from the fourth open end, and
performing the weighing and collection of a batch of by providing the articles to the inlet of the feeder system, the articles being distributed into the first and the second plurality of weighing pans, the articles discharged from the first and the second plurality of weighing pans into the timing hopper to form the batch having a total weight within the total target weight interval by selecting at least one of the weighing pans of the second plurality first and at least one of the weighing pans of the first plurality.

According to the teachings of the present invention the method according to the second aspect of the present invention described above may further include any of the features of the weighing and batching machine previously described.

The present invention is now to be further described with reference to the drawings in which
Fig. 1 is a schematic cross-sectional side view of a hybrid weigher,
Fig. 2 is a top view of the hybrid weigher of Fig. 1,
Fig. 3 is a schematic cross-sectional side view of a weighing pan used in the hybrid weigher of Figs. 1 and 2,
Fig. 4 is a schematic top view of the weighing pan of Fig. 3,
Fig. 5 is a schematic side view of a weighing pan used in the hybrid weigher of Figs. 1 and 2,
Fig. 6 is a schematic top view of the weighing pan of Fig. 5,
Fig. 7 is a schematic side view of a vibrating feeder,
Fig. 8 is a schematic cross-sectional side view of a conveyor belt feeder used in the hybrid weigher of Figs. 1 and 2,
Fig. 9 is a schematic top view of the conveyor belt feeder of Fig. 8,
Fig. 10 is a schematic side view of the timing hopper of Fig 1, and
Fig. 11 is a schematic frontal view of the timing hopper of Fig 10.

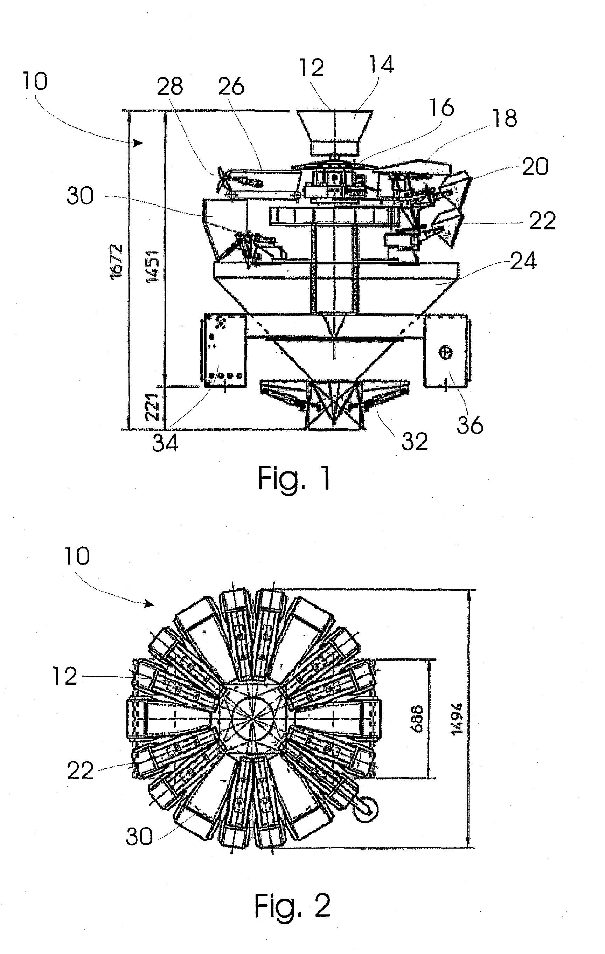

Fig. 1 is a schematic side view of the first and presently preferred embodiment of a hybrid weigher 10 according to the present invention. The hybrid weigher 10 is built up around a central shaft 12, or a non-rotating rod, bar or pole, alternatively around or in a frame, and comprises a funnel 14. The product to be weighed and batched is fed through the funnel 14 to a top cone 16 by an infeed system (not illustrated) adapted to the product's particular flow properties. The top cone 16 oscillates and vibrates to feed or distribute the product into a feeder, such as a vibrating feeder 18, alternatively a conveyor belt feeder 26.

The vibrating feeder 18 receives the product or article from the top cone 16 and the product is then delivered into a first number of assembling pans 20 and into a second number of larger weighing pans 30. Below each of the assembling pans 20, a respective weighing pan 22 is positioned.

The large weighing pans assembles a larger portion of products or articles close to the predetermined target weight, such as 75 to 80 per cent preferably 90 per cent of the target weight. In order to obtain a high throughput of products into the large weighing pan, products are fed from the top cone 16 into the large weighing pan 30 by a conveyor belt feeder 26 with a shutter device 28. The vibrating feeder 18 is controlled by a central computer or processing unit (not illustrated) that receives an electrical signal from each of the individual weighing pans 30 and 22, representing the weight of the content of the individual weighing pans 30 and 22 and generated by a weighing device included in the weighing pan. The computer controls the vibrating feeder 18 and may stop the vibrating feeder 18 when the content of the weighing pan 22 is nearing a predetermined weight.

The assembling pans 20 may be omitted, however, the assembling pans 20 are preferably provided and positioned above the weighing pans 22, either in registration with the weighing pans 22, alternatively displaced or offset with respect to the weighing pans 22. Alternatively, the hybrid weigher may be provided having additional assembling pans positioned above the weighing pans 30. Further alternatively, the assembling pans may be shifted from their preferred positions above the weighing pans to positions below the weighing pans.

The computer includes information regarding the weight of the content of each weighing pan 22 in the hybrid weigher 10 at any time as the computer has received signals as discussed above from the individual weighing pan 22 and will perform calculations when combining the weights of the products in the weighing pans 30 and the weighing pans 22 in order to obtain a predetermined batch weight.

The number of assembling pans 20 and weighing pans 22 and 30 is limited only by the geometrical configuration of the individual assembling pans 20 and weighing pans 22 and 30 and the overall geometry of the hybrid weigher 10; also the geometry of the individual assembling pans may differ.

The basic functionality of the hybrid weigher is the combination of small and large weighing pans, in the most basic form a hybrid weigher comprising only weighing pans may be envisioned. The feeder or feeders may then distribute the product or products into these weighing pans and the computer may at any time calculate a combination of these weighing pans that obtains a total batch weight within the target weight interval.

The predetermined batch weight is supplied to the computer by an operator using an input device on the hybrid weigher 10 or from an external computer connected to the computer in the hybrid weigher 10 by a communication line such as the internet or via an intranet constituted by wireless connections or connections by cable.

In the presently preferred embodiment of the present invention the computer calculates a combination of a weighing pan 30 and one or more weighing pans 22 corresponding to a total batch weight within the predetermined target weight interval.

The establishment of the target weight interval may be subject to a number of considerations. The target weight interval may be fixed by setting a maximum weight that the target weight under no circumstances may exceed combined with a lower tolerance level. An alternative to this may be to establish a lower and a higher limit around a given specific weight. A second alternative is to specify a minimum weight that the target weight may under no circumstances be below.

The computer signals the weighing pans 22 and 30 to empty their contents into an assembling hopper 24 mounted below the weighing pans 22 and 30. The assembling hopper 24 may be integrated with the timing hopper 32. The top circumference of the assembling hopper 24 may have an overall geometrical configuration corresponding to the placement of the weighing pans and assembling pans 20, so that the emptying of the weighing pans 22 and 30 does not result in any spilling of products.

Below the assembling hopper 24 a timing hopper 32 is mounted in register therewith for discharging the products into a packaging machine, packaging the products into any container such as bags, jars, etc. The timing hopper 32 receives the product or articles discharged from the combination of weighing pans 22 and 30 obtaining a weight within a specified target weight interval. In the situation where any combination of weighing pans 22 and 30 does not result in a target weight within the target weight interval, the timing hopper 32 may also function as a rejector by not dispensing the products or articles into the packaging machine beneath, but into another destination, such as a container collecting waste, alternatively a station collecting products or articles for recycling, reuse or redistribution into the weighing and batching machine. In this case any number of weighing pans may be emptied.

The hybrid weigher 10 also includes boxes for electronics 34, 36, such as a computer, power cabling, etc.

Fig. 2 is a schematic top view of the hybrid weigher 10 of Fig. 1, illustrating a circular configuration of the hybrid weigher 10 according to the present invention; alternatively the hybrid weigher may be constructed having an oblong configuration. In the circular configuration of the hybrid weigher 10, the weighing pans 30 and 22 are mixed in order to distribute the products or articles more evenly. Configuring all the large weighing pans 30, e.g. on one half of the hybrid weigher 10, and the smaller weighing pans 22 on the other half, may in operation result in the products or articles being distributed unevenly resulting in the larger weighing pans 30 not being filled adequately or even the smaller weighing pans 22 being overfilled. As discussed earlier at least one row or circle of corresponding assembling pans may preferably be mounted above or alternatively below the weighing pans 22 and 30.

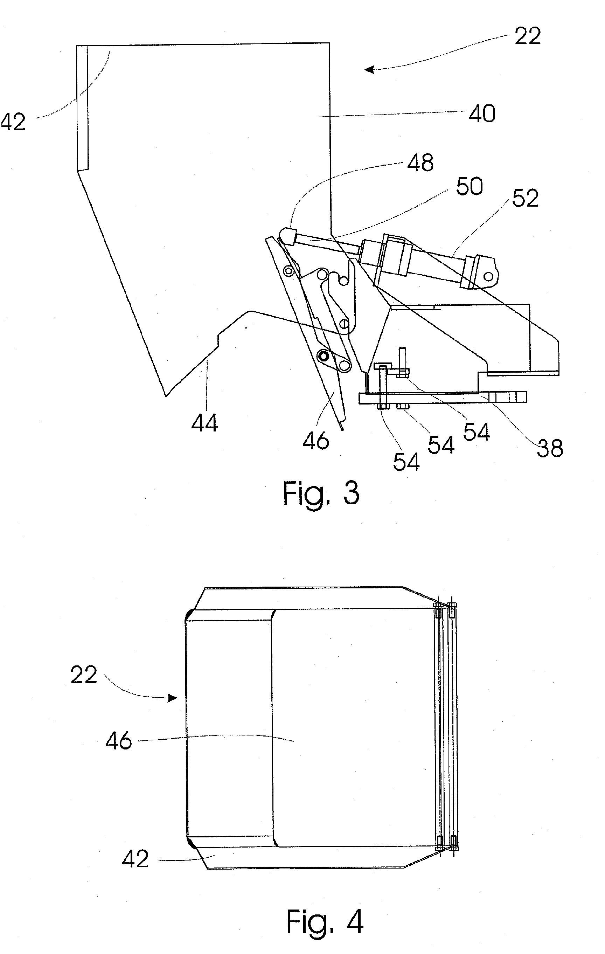

Fig. 3 is a schematic cross-sectional side view of a weighing pan 22 used in the hybrid weigher 10 of Figs. 1 and 2. The weighing pan 22 comprises a receptacle 40 defining a first open end 42 and an opposite second open end 44 where the first open end 42 is mounted upwardly and is adapted for receiving the articles to be weighed from the vibrating feeder 18. The second open end 44 is closed by a shutter 46 that also functions as a base for weighing the articles received from the vibrating feeder 18. In Fig. 3 the shutter 46 is illustrated in the open position, wherein the opening is achieved by extending a rod 50 from a housing 52 by means of hydraulics, pneumatics or mechanically. Retracting the rod 50 enables a spring system 48 to bring the shutter to a position where the second open end 44 is closed.

The base 38 of the weighing pan 22 is fixated to the frame of the weigher 10 by a number of bolts 54.

Fig. 4 is a schematic top view of the weighing pan 22 of Fig. 3. The weighing pan 22 is illustrated with the shutter 46 in a closed configuration.

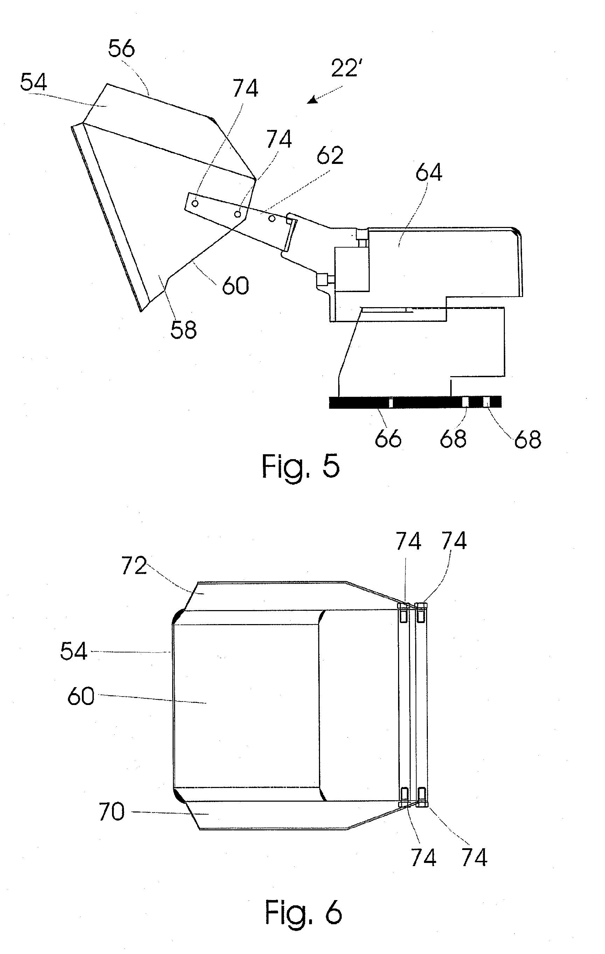

Fig. 5 is a schematic side view of an alternative weighing pan 22' to be used in the hybrid weigher 10 of Figs. 1 and 2. The weighing pan 22' comprises a receptacle 54 defining a third open end 56 and a fourth open end 58, having the third open end 56 oriented upwardly towards the vibrating feeder 18 and adapted for receiving the articles to be weighed. The fourth open end 58 is fitted with a second shutter 60 and oriented such that the articles may be ejected into the assembling pan 20 mounted below the weighing pan 22'. The weighing pan 22' may be mounted below the assembling pan 20 as described previously with reference to Fig 1 and Fig 2. The receptacle 54 is connected to the body of the weighing pan 22' by a attenuated oblong piece of metal 62 and in one end connected to the housing 64. The base 66 of the weighing pan 22' may be adapted for fixation to the frame of the hybrid weigher 10 by a number of bolts inserted into a number of apertures 68.

Fig. 6 is a schematic top view of the weighing pan 22' of Fig. 5 illustrating the receptacle 54 having two flaps 70, 72 extending from the side walls of the receptacle 54. In Fig. 6 four bolts all designated the reference numeral 74 are illustrated. The bolts 74 are used to fixate the receptacle to the one end of the attenuated, oblong piece of metal 62.

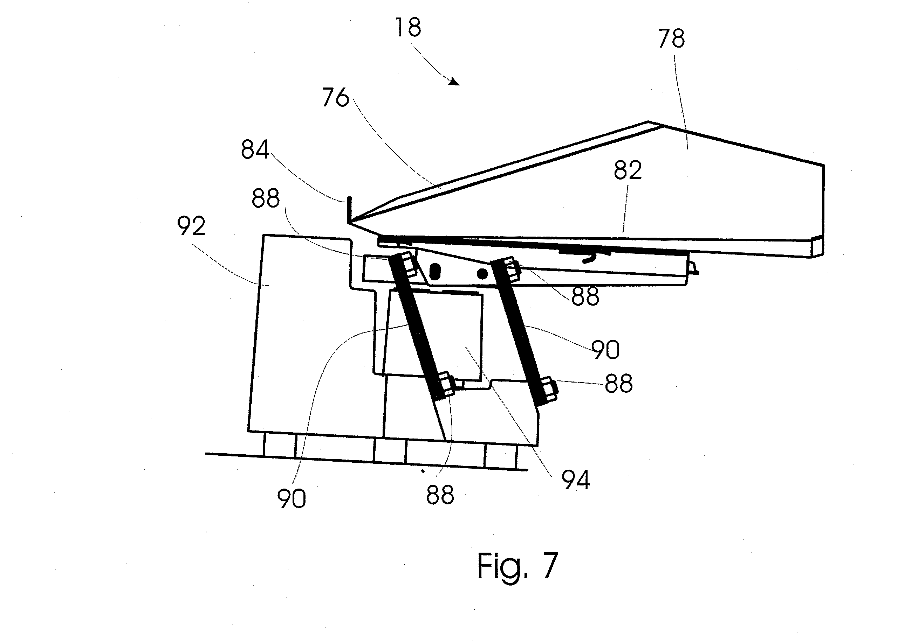

Fig. 7 is a schematic side view of a vibrating feeder 18 comprising a bowl or receptacle 76 adapted for receiving the articles to be weighed from the funnel 14 or from the top cone 16. The bowl 76 may be formed from a sheet of metal such that two side walls 78, 80 are formed extending upwardly from the bottom 82 of the bowl 76. At one end of the bowl 76 an end wall 84 extends upward from the bottom 82 such that the articles received are brought to the opposite end of the bowl 76. The base 86 of the bowl 76 connects to two springs 90 and is fixated thereto by a number of bolts 88. The opposite end of the sheet 90 is fixated to the housing 92 of the vibrating feeder 18. On the housing 92 is mounted a ballast block 94. On the top of the ballast block 92 one electromagnet 94 is mounted facing the base 86 of the bowl 76. The function of the electromagnet 94 is to alternate between attracting and repelling the bowl 76. The spring 90 is mounted in an angle such that the motion of the bowl 76 with the electromagnet 94 attract and repel the bowl 76 resulting in the articles, or article, being moved from the end of the bowl 76 having the end wall 84 to the opposite end of the bowl 76, thereby ejecting the articles from the vibrating feeder 18 into e.g. a weighing pan 22 or 22'. In a prototype version of the vibrating feeder 18 the duty cycle of the current applied to the electromagnet 94 is 50% of the current at the balance block 94.

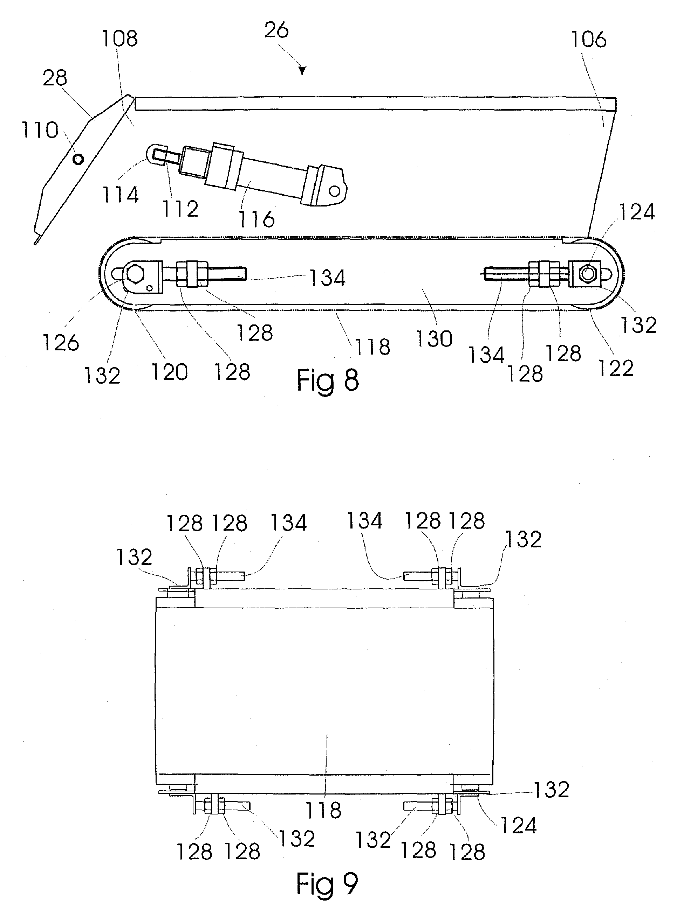

Fig. 8 is a schematic side view of a conveyor belt feeder 26 comprising an outer wall 106 defining a receptacle adapted for receiving articles from the funnel 14 or top cone 16 of the hybrid weigher 10. The outer wall 106 defines a fifth open end 108 at which a shutter device 28 is mounted, here illustrated in an open configuration. The shutter device 28 pivots around a point 110 constituted by an axle or a pivot extending from the sides of the shutter device 28.

The shutter 28 is open by a rod 112 having an end 114 used to push the shutter 28 from an open to a closed position. The rod extends from housing 116, the rod being operated by hydraulics, pneumatics or by an electromotor such as a step-motor.

The conveyor belt feeder further comprises a conveyor belt 118 in a prototype version of the conveyor belt feeder. The conveyor belt 118 is constituted by an endlessly rotating conveyor belt type. The conveyor belt 118 is engaged by two sprocket wheels 120, 122 by a motor, not illustrated. The sprockets 120, 122 are mounted on a rotational axle 124, 126 adapted for being driven by a external motor not illustrated. The base 130 of the conveyor belt feeder 26 is fixated to the frame of the hybrid weigher 10 by an angle hinge 132 in connection with a fixation rod 134 and a number of nuts 136.

Fig. 9 is a schematic top view of the conveyor belt feeder 26 of Fig. 8.

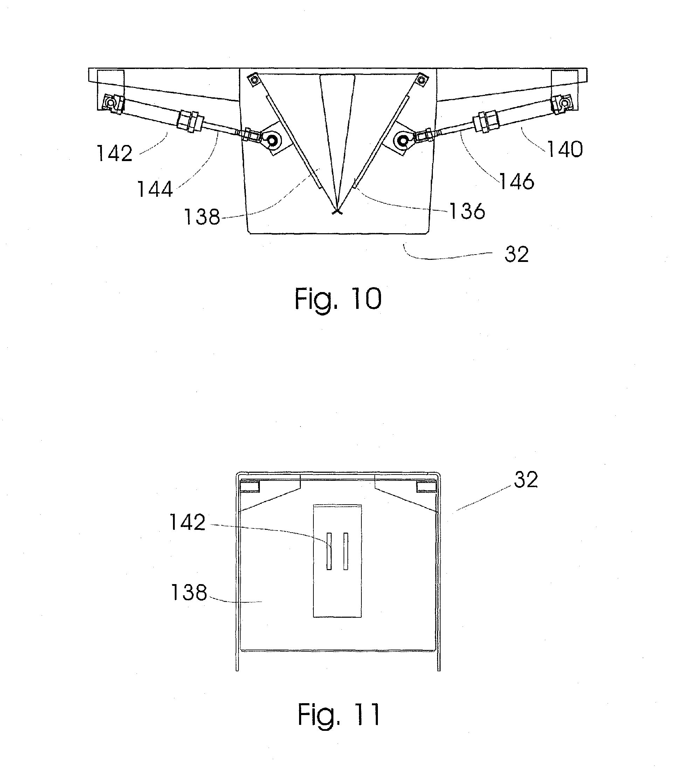

Fig. 10 is a schematic side view of the timing hopper 32 and Fig. 11 is a schematic front view of the timing hopper 32, both illustrating the flaps 136 and 138 in a closed configuration. While the flaps 136 and 138 are in the closed configuration the assembling hopper may deliver a batch or portion of articles to the timing hopper 32, whereby the timing hopper 32 functions as a temporary storing station until a suitable delivery receptacle is placed substantially in register with the timing hopper 32. The timing hopper 32 may also function as a reject station, rejecting the contents of one of the assembling pans, either from a large or a small assembling pan, alternatively a plurality of either or any combination thereof.

As described previously the timing hopper 32 may function as a rejection device, this function may be established by simply discharging the products or articles into a receptacle in the packaging machine and subsequently marking that specific receptacle in some way indicating that the contents of the receptacle contains a portion of products or articles does not comply with the specified weight interval. The marking may be substituted by some reject mechanism in the underlying packaging machine.

The flaps 136, 138 are operated by at least two reciprocating devices 140,142, such as pneumatically or hydraulically driven piston or jack. The reciprocating devices 140,142 operates the flaps 136,138 by retracting and extending, respectively, the arms 144,146 thereby opening and closing the passage of articles or products through the timing hopper 32.

In the preferred embodiment of the present invention the timing hopper 32 is fastened to underside of the assembling hopper. Alternatively the function of the timing hopper 32 may be integrated into the assembling hopper.

In the presently preferred embodiment of the present invention the number of large weighing pans is six and the number of assembling pans 20 is twelve. The large weighing pans are scattered or distributed between the smaller weighing pans 22, such that two smaller weighing pans 22 are mounted between two large weighing pans. The larger weighing pans 30 are logically and electrically collected in one unit but physically placed among the smaller weighing pans 22 in order to achieve a better flow and weight distribution. In the preferred embodiment of the present invention the large weighing pans 30 are used to collect a large amount of the articles, such as approximately 90% of the weight of the articles to be collected in one batch, the smaller weighing pans 22 are used to collect a smaller amount of articles, such as approx. 2,5% of the target weight. The conveyor belt feeder 26 may be substituted with a helicon conveyor / feed screw, alternatively a very large vibrating feeder in order to achieve a high throughput of articles. The target batch may be formed by emptying one large weighing pan and four smaller weighing pans.

The materials used to form the individual receptacles or bowl may be chosen from the group including stainless steel, anodised steel or the like. The sheets used to form the walls of the receptacles or bowls may be profiled. The profiles being constituted by a plurality of ripples of substantially the same size, alternatively by substantially elliptical holes, or any other geometrical configuration.

The metal sheets may be coated with a sheet of nylon mat or a sheet of rubber mat, or any combination here of, dependent of the characteristics of the product. E.g. a profiled stainless steel plate with polytetrafluoroethene (Teflon(tm)) may be well suited for a weighing and batching machine handling extremely sticky products, such as dates, while a smooth stainless steel sheet with rubber mat may be employed in machines handling highly fragile products such as cookies. A stainless steel sheet with nylon mat may be employed in machines handling hard objects such as nails and screws.

The pans may have a variety of sizes, again, dependant of the application and the size of the articles or products to be handled. A small pan of e.g. 900 cc may be used to handle products as small as 1 mm each, while a pan of 5500 cc may be used to handle products as large as 300 mm. Larger and smaller pans may, of cause, be envisioned, as well as the number of pans in a weighing and batching machine.

The weighing and batching machine according to the present invention may further be adapted or enhanced for better performance in a specific environment such as in a dusty environment, for example some areas within the confectionery industry, or the weighing and batching machine may be constructed in such a way that it is able to withstand operation in particularly wet and extremely humid environments such as in the fish industry as well as in the vegetable and frozen goods industry.

The multihead weigher may be divided into a number of completely separate product zones in which the weigher may mix the individual products from various product zones into one single batch, e.g. when collecting a batch consisting of frozen peas, carrots and cauliflower.

Furthermore, the weighing and batching machine according to the present invention may be equipped with digital correction technology for increasing the reliability and/or the accuracy of the measurements by eliminating vibrations caused by external sources which may influence the highly sensitive cells on the weighing and batching machine. A control unit may be employed to eliminate these external influences by performing continuous weighing and not reading the average weight for a certain period of time until the weigher is completely at rest. As a result, external vibrations and shocks will appear clearly and will be sorted out.

Based on the expected average weight of the product the calculation unit in the weighing and batching machine may include a program for determining the number of articles with a very high degree of accuracy. The accuracy of course depends on the homogeneity of the product, however, since the number of articles is determined on the basis of the weight of the portion in the individual pans rather than the total weight, standard deviations and thus the possibility of counting errors are reduced to a minimum.

## Claims

1. A weighing and batching system for weighing and collecting a batch of articles within a target weight interval, said system comprising:
a frame defining a top and a bottom opposite said top,
a feeder system having an inlet for receiving said articles and a plurality of outlets for discharging said articles,
a first plurality of weighing pans mounted in said frame, each of said weighing pans defining a first open end oriented upwardly and being positioned below said outlets of said feeder system for receiving in each of said weighing pans a portion of said articles discharged from a respective outlet, each of said first plurality of weighing pans spread along a first circumference, each of said weighing pans being operable between a weighing state and a transfer state, each of said weighing pans including a first actuator, each of said first actuators reversibly operating a respective weighing pan between said weighing state and said transfer state, each of said weighing pans accumulating said portion of said articles received through said first end of said weighing pan from a respective outlet of said feeder system when in said weighing state, and said weighing pan transferring said portion of said articles when in said transfer state, each of said weighing pans including a first weighing transducer for generating a first signal representing the weight of said portion received within said weighing pan, each of said weighing pans defining a first receiving volume,
a second plurality of weighing pans mounted in said frame, each of said weighing pans defining a second open end oriented upwardly and being positioned below said outlets of said feeder system for receiving in each of said weighing pans a portion of said articles discharged from a respective outlet, each of said second plurality of weighing pans spread along said first circumference, each of said weighing pans being operable between a weighing state and a transfer state, each of said weighing pans including a second actuator, each of said second actuators reversibly operating a respective weighing pan between said weighing state and said transfer state, each of said weighing pans accumulating said portion of said articles received through said second end of said weighing pan from a respective outlet of said feeder system when in said weighing state, and said weighing pan transferring said portion of said articles when in said transfer state, each of said weighing pans including a second weighing transducer for generating a second signal representing the weight of said portion received within said weighing pan, each of said weighing pans defining a second receiving volume, said second receiving volume being 2 to 50 times said first receiving volume, such as 5 to 45, such as 10 to 40, such as 15 to 30, such as 15 to 25, such as 17 to 21, such as 2 to 5, such as 5 to 10, such as 10 to 15, such as 15 to 20, such as 20 to 25, such as 25 to 30, such as 30 to 35, such as 35 to 40, and
an assembling hopper mounted in said frame defining a third open end oriented upwardly, said third open end defining a second circumference larger than said first circumference, said assembling hopper further defining a fourth open end opposite said third open end, said fourth open end defining a third circumference smaller than said second circumference defined by said third open end, said batch of articles discharged from said fourth open end.

2. The weighing and batching system according to claim 1, said system further comprising a reject device mounted below said assembling hopper, said reject device operating between a normal state and a reject state, when said reject device is in said normal state said batch of articles transferred from said assembling hopper passing through said reject device, when said reject device is in said reject state said batch transferred from said assembling hopper being rejected.

3. The weighing and batching system according to any of the claims 1 or 2, wherein said feeder system is constituted by a vibrating and reciprocating device.

4. The weighing and batching system according to any of the claims 1 to 3, wherein said feeder system further comprises a plurality of vibrating feeders mounted in said frame below said vibrating and reciprocating device and above said first and said second plurality of weighing pans, each of said vibrating feeders receiving a portion of said articles, said vibrating feeders releasing said portion into said first and said second plurality of weighing pans in a substantially even distribution.

5. The weighing and batching system according to any of the claims 1 to 3, wherein said feeder system further comprises a plurality of vibrating feeders mounted in said frame below said vibrating and reciprocating device and above said first and said second plurality of weighing pans, each of said vibrating feeders receiving a portion of said articles, said vibrating feeders releasing said portion into said first and said second plurality of weighing pans in a substantially Gaussian distribution.

6. The weighing and batching system according to any of the preceding claims, said system further comprising a conveyor system mounted below said assembling hopper, said conveyor system conveying receptacles for receiving a batch of said articles having a specific total weight.

7. The weighing and batching system according to any of the preceding claims, said system further comprising a microprocessor monitoring and calculation device for monitoring the weight of each of said protions in each of said weighing pans of said first and said second plurality, said calculation unit calculating a combination of said portions resulting in a total batch weight within said target weight interval.

8. The weighing and batching system according to any of the preceding claims, said system further comprising an external computer, a communications means connected to said calculation unit and said external computer, said communication means constituted by an local area network adapter, an internet connection or a direct connection, said external computer including input means, such as a keyboard, for inputting said target weight interval.

9. The weighing and batching system according to any of the preceding claims, said system further comprising a plurality of receptacles mounted in said frame, each of said receptacles mounted below said outlet, each of said receptacles defining a fifth open end oriented upwardly and being positioned below said outlets of said feeder system for receiving in each of said receptacles a portion of said articles discharged from a respective outlet, each of said receptacles positioned above a specific weighing pan of said first plurality, said plurality of receptacles corresponding to said first plurality of weighing pans.

10. The weighing and batching system according to any of the claims 1 to 8, said system further comprising a plurality of receptacles mounted in said frame, each of said receptacles defining a sixth open end oriented upwardly and being positioned below a specific weighing pan of said first plurality for receiving in each of said receptacles a portion of said articles, said plurality of receptacles corresponding to said first plurality of weighing pans.

11. The weighing and batching system according to any of the preceding claims, wherein said first circumference is substantially circular.

12. The weighing and batching system according to any of the claims 1 to 10, wherein said first circumference is substantially elliptical.

13. The weighing and batching system according to any of the claims 1 to 10, wherein said first circumference is substantially rectangular.

14. The weighing and batching system according to any of the claims 1 to 10, wherein said first circumference is substantially square.

15. The weighing and batching system according to any of the preceding claims, wherein said first plurality is at least two, preferably twelve.

16. The weighing and batching system according to any of the preceding claims, wherein said second plurality is at least two, preferably six.

17. The weighing and batching system according to any of the preceding claims, wherein said first plurality of weighing pans is 1 to 10 times said second plurality, such as 1 to 7, such as 1,5 to 5, such as 1,5 to 3,5, such as equal to said first plurality, such as 1 to 2 times, such as 2 to 3, such as 3 to 4, such as 4 to 5, such as 5 to 6, such as 6 to 7, such as 7 to 8, such as 8 to 9, such as 9 to 10.

18. The weighing and batching system according to any of the preceding claims, wherein said weighing pans are mounted in said frame in groups, each of said groups including one weighing pan of said second plurality and at least one of said weighing pans of said first plurality.

19. The weighing and batching system according to any of the preceding claims, wherein said first plurality of weighing pans are mounted in said frame separated from said second plurality.

20. The weighing and batching system according to any of the preceding claims, wherein said feeder system, said first and said second plurality of weighing pans and/or said assembling hopper being crafted in stainless steel, such as AISI 304 and/or AISI 316, in profiled stainless steel or in any combination thereof.

21. The weighing and batching system according to any of the preceding claims, wherein any of said feeder system, said first and/or said second plurality of weighing pans and/or said assembling hopper being coated with a wear resistant coating, such as ceramics, a plastics coating, polytetrafluoroethene or in any combination thereof.

22. The weighing and batching system according to any of the preceding claims, wherein any of said feeder system, said first and said second plurality of weighing pans and/or said assembling hopper being coated with nylon mat, alternatively rubber mat or any combination thereof.

23. A method for weighing and batching articles within a target weight interval, said method comprising:
providing a frame defining a top and a bottom opposite said top,
providing a feeder system having an inlet for receiving said articles and a plurality of outlets for discharging said articles,
providing a first plurality of weighing pans mounted in said frame, each of said weighing pans defining a first open end oriented upwardly and being positioned below said outlets of said feeder system for receiving in each of said weighing pans a portion of said articles discharged from a respective outlet, each of said first plurality of weighing pans spread along a first circumference, each of said weighing pans being operable between a weighing state and a transfer state, each of said weighing pans including a first actuator, each of said first actuators reversibly operating a respective weighing pan between said weighing state and said transfer state, each of said weighing pans accumulating said portion of said articles received through said first end of said weighing pan from a respective outlet of said feeder system when in said weighing state, and said weighing pan transferring said portion of said articles when in said transfer state, each of said weighing pans including a first weighing transducer for generating a first signal representing the weight of said portion received within said weighing pan, each of said weighing pans defining a first receiving volume,
providing a second plurality of weighing pans mounted in said frame, each of said weighing pans defining a second open end oriented upwardly and being positioned below said outlets of said feeder system for receiving in each of said weighing pans a portion of said articles discharged from a respective outlet, each of said second plurality of weighing pans spread along said first circumference, each of said weighing pans being operable between a weighing state and a transfer state, each of said weighing pans including a second actuator, each of said second actuators reversibly operating a respective weighing pan between said weighing state and said transfer state, each of said weighing pans accumulating said portion of said articles received through said second end of said weighing pans from a respective outlet of said feeder system when in said weighing state, and said weighing pan transferring said portion of said articles when in said transfer state, each of said weighing pans including a second weighing transducer for generating a second signal representing the weight of said portion received within said weighing pan, each of said weighing pans defining a second receiving volume, said second receiving volume being 2 to 50 times said first receiving volume, such as 5 to 45, such as 10 to 40, such as 15 to 30, such as 15 to 25, such as 17 to 21, such as 2 to 5, such as 5 to 10, such as 10 to 15, such as 15 to 20, such as 20 to 25, such as 25 to 30, such as 30 to 35, such as 35 to 40,
providing an assembling hopper mounted in said frame defining a third open end oriented upwardly, said third open end defining a second circumference larger than said first circumference, said assembling hopper further defining a fourth open end opposite said third open end, said fourth open end defining a third circumference smaller than said second circumference defined by said third open end, said batch of articles discharged from said fourth open end, and
performing said weighing and batching by providing said articles to said inlet of said feeder system, said articles being distributed into said first and said second plurality of weighing pans, said articles discharged from said first and said second plurality of weighing pans into said assembling hopper to form said batch having a total weight within said total target weight interval.

24. The method according to claim 23, said method further comprising the step of converting said weight of said articles to an estimated number of said articles.

25. The method according to any of the claims 23 or 24, said method further comprising the step of rejecting said batch from said assembling hopper, when the weight of said batch is not compliant with said target weight interval.

26. A method according to any of the claims 23 to 25, said method further comprising any of the features of the claims 2 to 22.
